# EUROPÄISCHE PATENTANMELDUNG

(11) **EP 0 615 680 A1**
(43) Veröffentlichungstag der Anmeldung: **21.09.1994**
(21) Anmeldenummer: 94103749.1
(22) Anmeldetag: 11.03.1994
(51) Int. Cl.: A01B 19/06, A01B 39/18, E01H 11/00

(54) **Gerät zum Entfernen von Wildkrautbewuchs auf Anlagen, wie Wegen, Plätzen und Parks**

(30) Priorität: 17.03.1993 DE 4308533; 08.09.1993 DE 4330398
(71) Anmelder: WEISS, Günther, 77855 Achern (DE)
(72) Erfinder: Weiss, Günther, D-77855 Achern-Sasbachried (DE); Huber, Konrad, D-77704 Oberkirch (DE); Lipp, Willi, D-77855 Achern-Sasbach (DE)

(57) **Zusammenfassung**

Die Erfindung betrifft ein Gerät (1) zum Entfernen von Wildkrautbewuchs auf Wegen, Plätzen, Parks und ähnlichen Anlagen, die insbesondere eine Decke aus Kies, Sand, Schotter oder dergleichen aufweisen. Das Gerät (1) besitzt einen Geräteträger mit zumindest einem bewegbaren Bauteil, an dem zumindest ein mit dem Boden in Kontakt zu bringendes Werkzeug (60) gelagert ist. Um für das Gerät (1) eine hohe Reinigungswirkung bei nur geringer Beschädigung des Bodens zu erreichen ist vorgesehen, daß das Werkzeug (60) ein schuhartiges Basisteil aufweist, das an seiner in Fahrtrichtung weisenden Vorderkante und seinen Seitenkanten Schneiden besitzt, mit denen es zumindest teilweise in den Boden eingetaucht, und daß das Werkzeug (60) eine im wesentlichen quer zur Fahrtrichtung verlaufende Oszillationsbewegung ausführt. Dabei kann das Werkzeug (60) in Fahrtrichtung nach unten geneigt sein. Vorzugsweise ist das Basisteil (63b) im wesentlichen plattenförmig ausgebildet und die Schneiden sind von nach unten gebogenen Randbereichen des Basisteils (63b) gebildet.

## Beschreibung

Die Erfindung betrifft ein Gerät zum Entfernen von Wildkrautbewuchs auf wegen, Plätzen, Parks usw., die insbesondere eine Decke aus Kies, Sand, Schotter oder dergleichen aufweisen, mit einem Geräteträger, der zumindest ein bewegbares Bauteil aufweist, an dem zumindest ein mit dem Boden in Kontakt zu bringendes Werkzeug gelagert ist.

Auf den genannten Anlagen kommt es im Laufe der Zeit zu einem Wachstum von Wildkraut bzw. Unkraut, das in regelmäßigen Abständen entfernt werden muß. In früheren Zeiten wurden zu diesem Zweck chemische Vertilgungsmittel verwendet oder das Wildkraut wurde abgebrannt, was jedoch heutzutage beides zumindest im gewerblichen und kommunalen Bereich verboten ist.

Es sind deshalb Geräte zum Entfernen von Wildkrautbewuchs entwickelt worden, die rotierende Bürsten aufweisen, mit denen das Wildkraut herausgerissen werden soll. Eine andere Ausführung besitzt eine quer zur Fahrtrichtung des Gerätes angeordnete rotierende Schnecke, die um ein geringes Maß in den Boden eindringt. Mit beiden genannten Geräten ist jedoch der Nachteil verbunden, daß sie den oberen Bodenbelag zur Seite streuen und fördern, so daß in erheblichem Maße Nacharbeiten notwendig sind. Darüber hinaus ist die Reinigungsleistung der genannten Geräte nicht ausreichend.

Aus der DE-PS 356 512 ist ein Gerät zur Bekämpfung von Unkraut bekannt, das eine Vielzahl von Messern aufweist, die unter die Oberfläche des Bodens eintauchen können. Wenn das Gerät verfahren wird, werden auch die Messer verschoben, wodurch das Unkraut abgeschnitten werden soll. Es hat sich jedoch gezeigt, daß der Wirkungsgrad eines derartigen Gerätes sehr gering ist.

Aus der DE 32 11 152 A1 ist es bekannt, mehrere Werkzeuge in Form von Messern an einem gemeinsamen Werkzeugträger anzubringen. Die Werkzeuge tauchen in den Erdboden ein, wobei der Werkzeugträger rotiert. Bei einem derartigen Vorgehen wird jedoch die Bodenoberfläche in starkem Maße aufgewühlt, so daß auch hierbei erhebliche Nacharbeiten notwendig sind.

Der Erfindung liegt die Aufgabe zugrunde, ein Gerät der genannten Art zu schaffen, das die Nachteile der bisherigen Geräte beseitigt und insbesondere eine hohe Reinigungswirkung bei nur geringer Beschädigung des Bodens gewährleistet.

Erfindungsgemäß wird diese Aufgabe dadurch gelöst, daß das Werkzeug ein schuhartiges Basisteil aufweist, das an seiner in Fahrtrichtung weisenden Vorderkante und seinen Seitenkanten Schneiden besitzt, mit denen es zumindest teilweise in den Boden eintaucht, und daß das Werkzeug eine im wesentlichen quer zur Fahrtrichtung verlaufende Oszillationsbewegung ausführt.

Das schuhartige Basisteil taucht bei Betrieb mit den Schneiden unter die Deckschicht der zu bearbeitenden Fläche ein. Die Bewegung des Basisteils quer zur Fahrtrichtung kann durch eine lineare Oszillationsbewegung oder eine oszillierende Schwenkung erreicht werden. Es hat sich bewährt, dafür eine Frequenz von etwa 400 min⁻¹ vorzusehen. Vorzugsweise wird die Oszillationsbewegung des Werkzeugs dadurch erreicht, daß das am Gerätekörper gelagerte Bauteil im wesentlichen quer zur Fahrtrichtung hin- und herbewegt wird. Die Schneiden des schuhartigen Basisteils reißen das Wildkraut heraus, ohne daß es abgerissen oder abgeschnitten wird. Das Wildkraut wird an die Oberfläche geworfen, während der Kies, Sand etc. sofort wieder nach unten fällt, so daß eine Trennung infolge der Gravitationskraft erreicht wird.

Vorzugsweise ist das Werkzeug in Fahrtrichtung nach unten geneigt, da auf diese Weise ein sicheres Eintauchen des Werkzeugs in den Boden gewährleistet ist.

In bevorzugter Ausgestaltung der Erfindung ist vorgesehen, daß das Basisteil im wesentlichen plattenförmig ausgebildet ist und die Schneiden von nach unten gebogenen Randabschnitten des Basisteils gebildet sind. Dabei kann unterhalb des plattenformigen Basisteils ein von den nach unten gebogenen Randbereichen begrenzter Hohlraum gebildet sein. Das schuhartige Werkzeug ist auf diese Weise konkav ausgebildet. Die Rückseite des Werkzeugs ist dabei nicht nach unten umgebogen und somit offen. Die Schneiden können auch so ausgebildet sein, daß sie z.B. durch winkelig zueinander, vorne aufeinander zulaufende Kanten gebildet sind, d.h. eine dreieckige bis bogenförmige Konfiguration besitzen, wobei diese Schneidkanten über einen Verbindungsbereich mit dem hin- und herbewegten Bauteil verbunden sind.

Das schuhartige Werkzeug kann die Form eines mit der Wölbung nach oben liegenden Spatens oder einer entsprechenden Schaufel besitzen. Es kann auch tatzen- oder prankenartig geformt sein oder eine Klingen-, Messer-oder Schaberform aufweisen. Darüber hinaus kann es nach oben gewölbt sein.

Statt eines plattenförmigen Basisteils mit nach unten gebogenen Randbereichen kann auch ein massives Bauteil mit spitz zulaufenden Seitenkanten verwendet werden.

Weiterhin hat es sich als vorteilhaft erwiesen, wenn die zwischen den Schneidkanten liegenden Flächen größer sind als der Querschnitt derjenigen Verbindungsbereiche des Werkzeugs, über die das Werkzeug mit dem hin- und herbewegten Bauteil verbunden ist. Auf diese Weise kann eine Verstopfung durch das aus dem Boden herausbeförderte Unkraut, an dem sich neben den Wurzeln auch noch das zwischen und um die Wurzel befindliche Erdreich befindet, verhindert werden. Als zweckmäßig haben sich Breiten in der Größenordnung zwischen 2 cm und 10 cm und Längen in der Größenordnung zwischen 2 cm und 10 cm, vorteilhafterweise jeweils zwischen 3 cm und 8 cm erwiesen.

Zweckmäßigerweise werden mehrere Werkzeuge im wesentlichen quer zur Fahrt- bzw. Bewegungsrichtung in zumindest einer Reihe nebeneinander angeordnet. Dabei sollten die Werkzeuge einen solchen Abstand zueinander aufweisen, daß die Bewegungsbahnen zweier benachbarter Werkzeuge einander überdecken. Als besonders vorteilhaft hat es sich erwiesen, wenn zwei Reihen von Werk-zeugen in einem Abstand hintereinander vorgesehen sind. Dabei können die Werkzeuge der vorderen Reihe gegenläufig zu den Werkzeugen der hinteren Reihe arbeiten. Um mit den Werkzeugen der vorderen Reihe eine Vorbearbeitung und mit den Werkzeugen der hinteren Reihe eine Endbearbeitung zu erzielen, können die Werkzeuge der vorderen Reihe unterschiedlich zu den Werkzeugen der hinteren Reihe ausgestaltet sein.

Es können sämtliche Werkzeuge einer Reihe je auf einem hin- und herbewegten Balken befestigt sein oder aber es können jeweils ein oder mehrere Werkzeuge auf einem eigenen hin- und herbewegten Balken oder Hebel befestigt sein. Bei der letztgenannten Ausführungsform kann es zweckmäßig sein, wenn je zwei benachbarte Werkzeuge jeweils paarweise auf einem Hebel vorgesehen sind, der als zweiarmiger Hebel wirksam ist und um eine zumindest annähernd senkrecht zur bearbeitenden Fläche angeordneten Achse schwenkbar ist, so daß sowohl ein Paar Werkzeuge der vorderen Reihe als auch ein Paar Werkzeuge der hinteren Reihe auf diesem Hebel vorgesehen sind und die Werkzeuge eine kreisbogenartige Schwenkung ausführen.

Insbesondere bei solchen Geräten, bei denen mehr als zwei Werkzeuge in einer Reihe angeordnet sind, hat es sich als besonders vorteilhaft erwiesen, wenn zumindest die Werkzeuge nicht starr sondern relativ zum Gerät und/oder zum Hebel und/oder zum Balken verlagerbar angeordnet sind. Es können aber auch die Balken oder die Hebel, auf denen ein oder mehrere Werkzeuge befestigt sind, relativ zum Gerät oder zu anderen Bauteilen, an denen die Hebel, Balken oder dergleichen befestigt sind, verlagerbar bzw. verschwenkbar angeordnet sein. Auf diese Weise können sich die Werkzeuge den Unebenheiten des Bodens anpassen. Vorzugsweise besteht der Geräteträger aus mehreren relativ zueinander schwenkbaren Abschnitten, die polygonartig einstellbar sind. Auf diese Weise läßt sich der Geräteträger an das Profil eines zu bearbeitenden Weges anpassen.

Die Werkzeuge können gegenüber den hin- und herbewegten Bauteilen, also z.B. einem hin- und herbewegten Balken, in ihrer Höhe verlagerbar gehalten sein. Dabei können die hin- und herbewegten Bauteile auch selbst in ihrer Höhe verlagerbar sein. Es kann auch vorgesehen sein, daß die Werkzeuge gegenüber den hin- und herbewegten Bauteilen oder die Bauteile gegenüber dem Gerät z.B. quer zu ihrer Bewegungsrichtung pendelnd oder kippbar gehalten sind.

Dabei kann es vorteilhaft sein, wenn die verlagerbaren Werkzeuge oder hin- und herbewegten Bauteile von einem Kraftspeicher in Richtung des Bodens beaufschlagt sind. Der Kraftspeicher stellt sicher, daß ein bestimmter Druck auf die Arbeitsflächen der Werkezeuge ausgeübt wird und die Schneiden möglichst gleichmäßig in den Boden eintauchen. Je nach dem, ob das gesamte hin- und herbewegte Bauteil oder lediglich das Werkzeug gegenüber dem Gerät verlagerbar gehalten ist, kann es zweckmaßig sein, wenn entweder die hin- und herbewegten Bauteile oder die Werkzeuge von dem Kraftspeicher belastet sind. Als Kraftspeicher können ein Gewicht, z.B. ein Zusatzgewicht oder das Eigengewicht der hin-und herbewegten Bauteile, oder eine Feder vorgesehen sein. Als Kraftspeicher kann jedoch auch ein mit einem Druckmedium arbeitender Kraftspeicher, z.B. ein mit einem hydraulischen Medium arbeitender Kraftspeicher bzw. ein Hydraulikmotor dienen.

Bei der Verwendung von zweiarmigen Hebeln als Träger für je ein Paar von Werkzeugen der vorderen Reihe und je ein Paar von Werkzeugen der hinteren Reihe kann es zweckmäßig sein, wenn die Schwenkachsen der seitlich äußeren Hebel des Gerätes ortsfest am Gehäuse gelagert sind und die dazwischen angeordneten zweiarmigen Hebel relativ verlagerbar gegenüber dem Gerät gelagert sind. Dabei kann die Anordnung so getroffen sein, daß einer der zweiarmigen Hebel, z.B. einer der äußeren Hebel, von einem oszillierenden Antrieb des Gerätes antreibbar ist, wobei die oszillierende Bewegung über eine Kopplung auf die anderen Hebel übertragen wird. Als Kopplung kann ein zwischen den Hebeln gespanntes Seil, ein Gestänge oder ein Hydraulik-System Verwendung finden. Als vorteilhaft hat es sich weiterhin erwiesen, wenn die zwischen den beiden äußeren zweiarmigen Hebeln angeordneten zweiarmigen Hebel frei pendelnd geführt und über einen Kraftspeicher am Gerät abgestützt sind.

Weitere Einzelheiten und Merkmale der Erfindung sind aus der folgenden Beschreibung von Ausführungsbeispielen unter Bezugnahme auf die Zeichnung ersichtlich. Es zeigen:
- Figur 1: Ein Gerät in Ansicht,
- Figur 2: Das Gerät gemäß Figur 1 in Draufsicht,
- Figur 3: Eine vergrößerte Darstellung des Schnittes III-III in Figur 1,
- Figur 4: Den Schnitt IV-IV in Figur 3,
- Figur 5: Eine vergrößerte Darstellung des Schnittes V-V in Figur 2,
- Figur 6: Den Schnitt VI-VI in Figur 4,
- Figur 6a: Eine teilweise im Schnitt gezeigte Ansicht der Figur 6,
- Figur 7: Eine vergrößerte Darstellung des Schnittes VII-VII in Figur 2,
- Figur 7a: Den Schnitt VIIa-VIIa in Figur 7,
- Figur 7b: Eine Ansicht in Richtung des Pfeils VIIb in Figur 7a,
- Figur 8: Eine vergrößerte Darstellung des Schnittes VIII-VIII in Figur 1,
- Figur 9: Den Schnitt IX-IX in Figur 8,
- Figur 10: Eine vergrößerte Ansicht des Bereichs X in Figur 8,
- Figur 10a: Eine Ansicht aus Richtung des Pfeils Xa,
- Figur 10b: Eine Ansicht aus Richtung des Pfeils Xb,
- Figur 11: Eine Darstellung des Schnittes XI-XI in Figur 9,
- Figur 11a: Einen Schnitt XIa-XIa in Figur 11,
- Figur 11b: Einen Schnitt XIb-XIb in Figur 11,
- Figur 12: Ein Gerät gemäß einer weiteren Ausführungsform in Ansicht und zur Hälfte abgedeckt,
- Figur 13: Eine Draufsicht auf das Gerät gemäß Figur 12,
- Figur 14: Einen Schnitt XIV-XIV in Figur 13,
- Figur 15: Einen Schnitt XV-XV in Figur 14,
- Figur 16: Einen Schnitt XVI-XVI in Figur 15,
- Figur 17: Eine Ansicht aus Richtung des Pfeils XVII-XVII in Figur 13,
- Figur 18: Eine vergrößerte Darstellung des Schneidrades gemäß Figur 17 und
- Figur 19: Eine Seitenansicht des Schneidrades gemäß Figur 18.

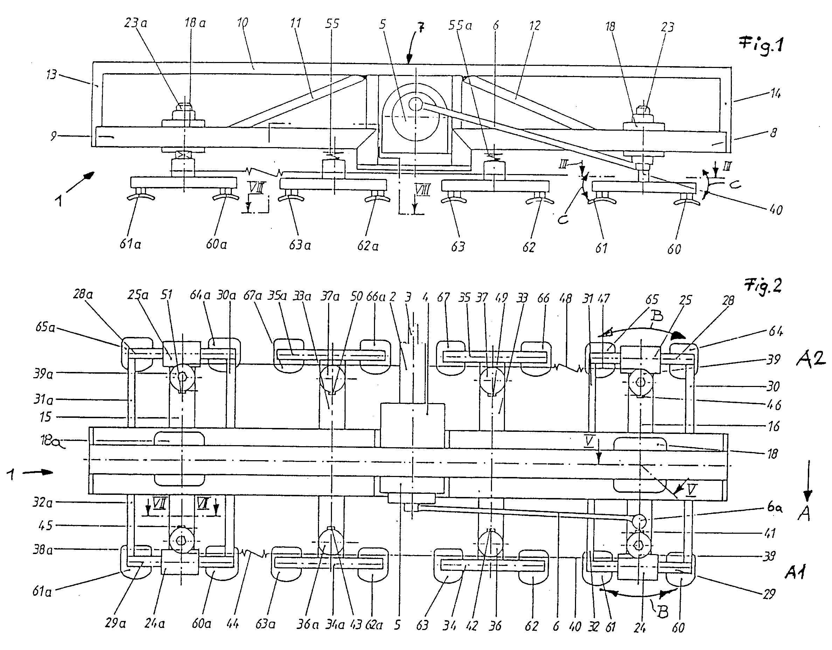

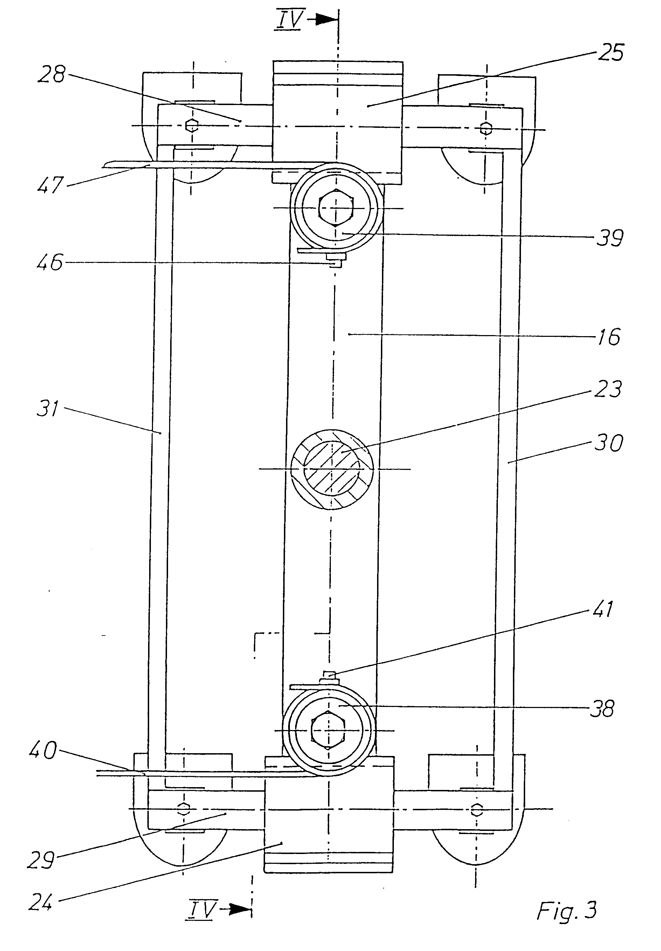

Die Figuren 1 und 2 zeigen ein Gerät 1 zum Entfernen von Wildkrautbewuchs, das am vorderen Bereich eines an sich bekannten selbstfahrenden, mittels Holmen lenkbaren Einachstraktors angebracht ist, der einen Ausleger 2 und eine rotierend angetriebene Antriebswelle 3 aufweist. Die Antriebswelle 3 treibt ein in einem Gehäuse 4 angeordnetes Getriebe, welches über einen Kurbeltrieb 5 einer Kurbelstange 6 eine hin- und hergehende Bewegung verleiht. Die hinter dem gezeigten Bereich der Antriebswelle 3 angeordnete Antriebsachse, das Getriebe, der Motor sowie die Holme und die Antriebsräder sind nicht dargestellt. Die Fahrtrichtung ist mit A bezeichnet.

Um das Gehäuse 4 ist ein Rahmen 7 befestigt, der aus unteren Querträgern 8,9 sowie einem oberen Querträger 10, Stützstreben 11,12 und Querverbindungen 13,14 besteht. Der Rahmen 7 erstreckt sich im wesentlichen senkrecht zur Fahrtrichtung A.

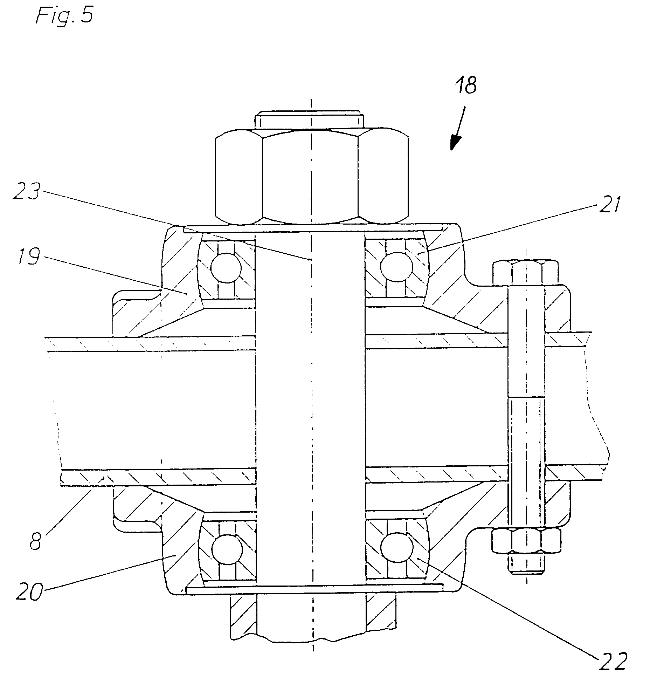

Auf den unteren Querträgern 8,9 ist jeweils an den Seiten des Gerätes ein zweiarmiger Hebel 15,16 über je einen Lagerblock 18,18a schwenkbar gelagert. Der Lagerblock 18, der in Figur 5 näher dargestellt ist, enthält je eine obere und untere Lagerhaltung 19,20 mit je einem Wälzlager 21,22, über die eine Welle 23 im Querträger 8 schwenkbar gelagert ist.

Der Lagerblock 18a für eine Welle 23a auf der anderen Seite des Gerätes ist spiegelbildlich zum Lagerblock 18 aufgebaut bzw. angeordnet.

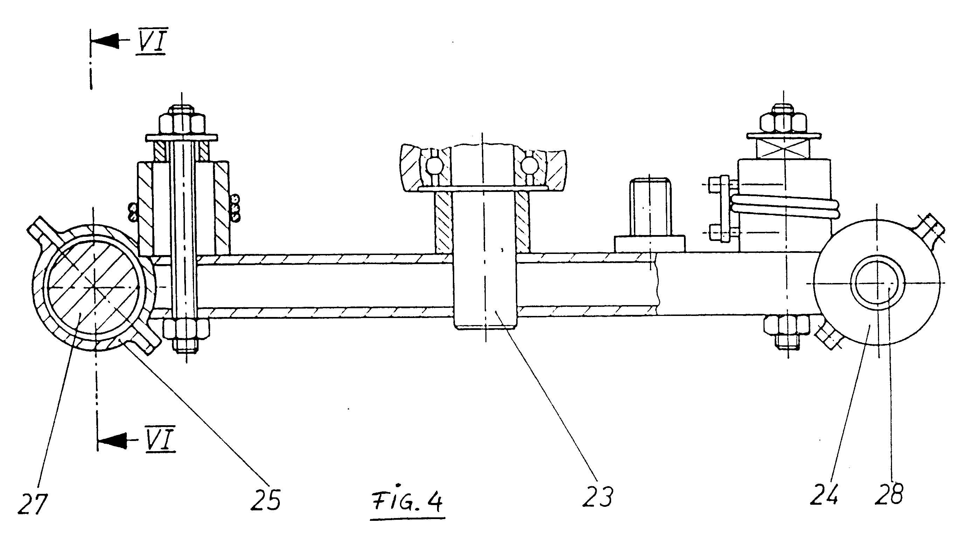

Jeder der zweiarmigen Hebel 15,16 besitzt an seinem vorderen Ende eine Muffe 24,24a und an seinem hinteren Ende eine entsprechende Muffe 25,25a, wie dies für den Hebel 16 auch im Zusammenhang mit Figur 3 und 4 ersichtlich ist.

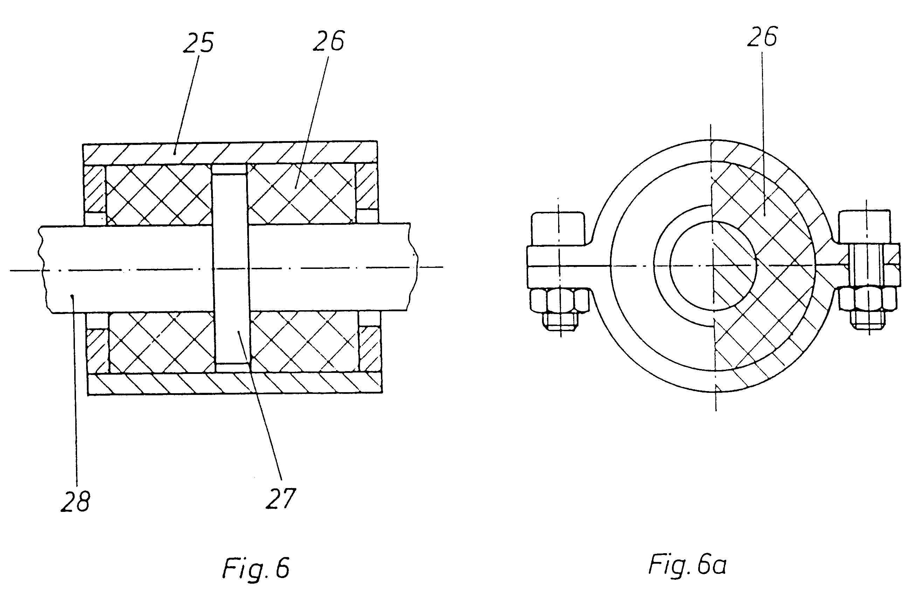

Wie aus den Figuren 6 und 6a hervorgeht, umgreift die Muffe 25 über eine Gummilagerung 26 einen Flansch 27 eines Stabes 28, der somit winkelbeweglich gegenüber der Muffe 24 und dem zweiarmigen Hebel 16 ist.

In jeder der Muffen 24,25,24a,25a der äußeren zweiarmigen Hebel 15,16 ist auf diese Weise ein Stab 28,29 bzw. 28a,29a gelagert bzw. gehalten.

Querstreben 30,31 bzw. 30a,31a verbinden die Stäbe 28, 29 bzw. 28a,29a untereinander, so daß je ein um die Wellen 23,23a entsprechend den Pfeilen B,B schwenkbarer Rahmen 32,32a gebildet ist. Über eine Gummilagerung der Stäbe 28,29;28a,29 ist eine schwenk- bzw. pendelbare Halterung der Rahmen 32,32a entsprechend den Pfeilen C gebildet, so daß die am Rahmen 32,32a befestigte Werkzeuge 60,61,62,63,64,65,66,67,60a,61a,62a,63a,64a,65a, 66a,67a sich den Bodenunebenheiten angleichen können.

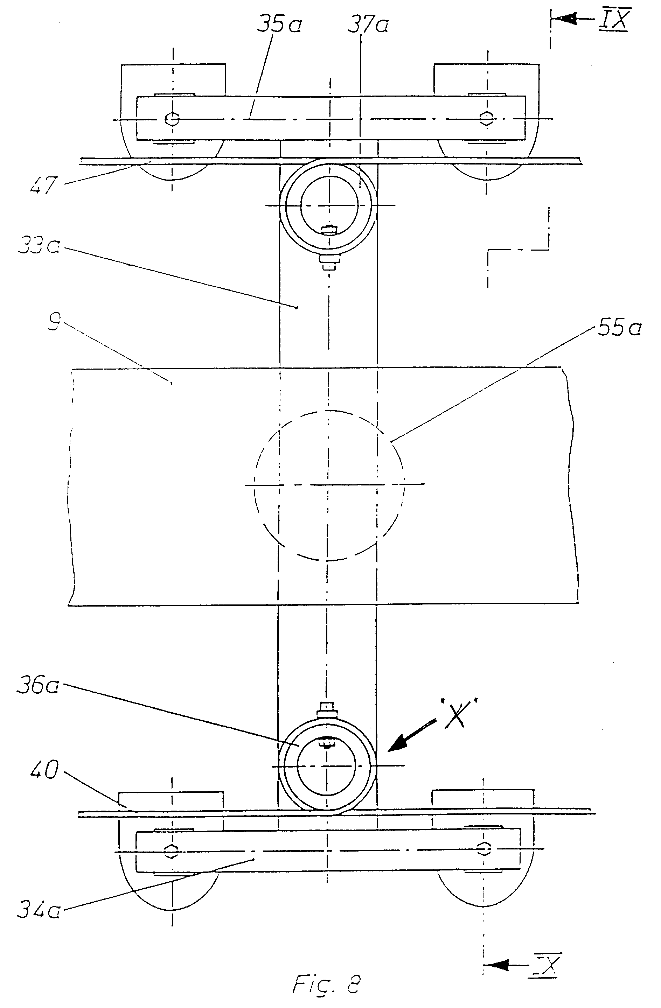

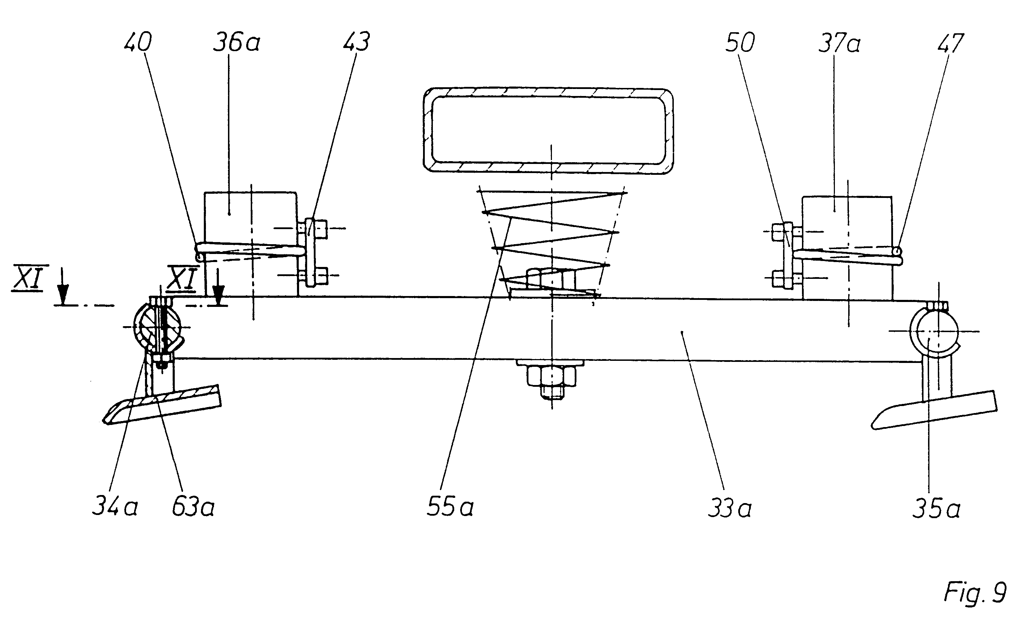

Zwischen den beiden zweiarmigen Hebeln 15,16 bzw. den Rahmen 32,32a sind zwei weitere zweiarmige Hebel 33,33a angeordnet, die am vorderen und hinteren Ende je eine Querstrebe 34,35 bzw. 34a,35a tragen, wie dies auch im Zusammenhang mit den Figuren 8 und 9 für den Hebel 33a zu sehen ist.

Jeder der Hebel 33,33a trägt jeweils an seinem vorderen und hinteren Ende eine Muffe 36,37 bzw. 36a,37a.

Die Rahmen 32,32a bzw. die zweiarmigen Hebel 16,15 tragen ebenfalls Muffen 38,39 bzw. 38a,39a.

Wie bereits erwähnt, ist am Kurbeltrieb 5 das eine Ende der Kurbelstange 6 festgelegt. Das andere Ende der Kurbelstange 6 ist über eine Gelenkverbindung 6a am zweiarmigen Hebel 16 angelenkt, wodurch die oszillierenden Bewegungen des Kurbeltriebes 5 auf den Hebel 16 bzw. den Rahmen 32 übertragen werden und Schwenkbewegungen entsprechend den Pfeilen B erzeugt werden.

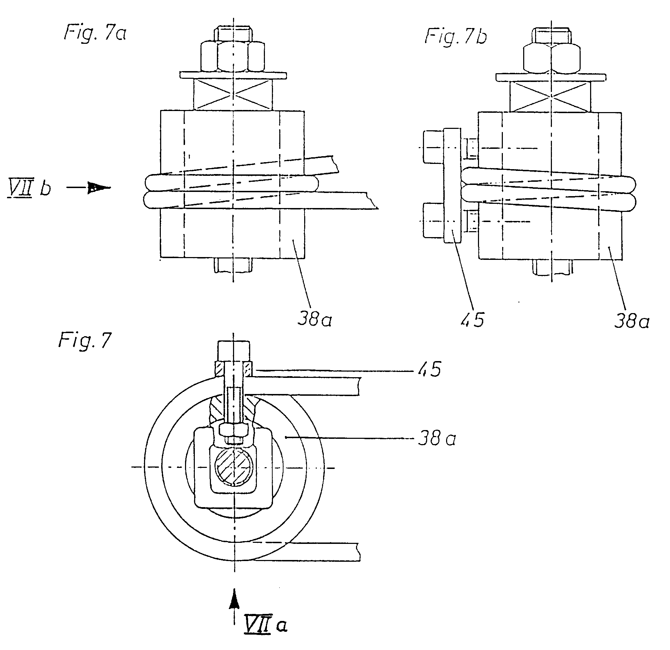

An der Muffe 38 ist über eine Klemmverbindung 41 ein Seil, zweckmäßigerweise ein Drahtseil 40 befestigt. Das Seil 40 läuft zur Muffe 36, umschlingt diese (das Seil ist über eine Klemmverbindung 42 auf der Muffe festgelegt), läuft weiter zur Muffe 36a, auf der es über eine Klemmverbindung 43 festgeklemmt ist, und von dort aus weiter über eine Spannfeder 44 zur Muffe 38, auf der das Seil 40 über eine Klemmverbindung 45 festgelegt ist, wie dies auch aus den Figuren 7, 7a und 7b ersichtlich ist.

Auf der am rückseitigen Ende des zweiarmigen Hebels 16 befestigten Muffe 39 ist über eine Klemmverbindung 46 ebenfalls ein Seil 47 festgelegt und läuft unter Zwischenschaltung einer Spannfeder 48 um die Muffe 37, auf der es über eine Klemmverbindung 49 festegelgt ist. Von der Muffe 37 läuft es zur Muffe 37a, auf der es über eine Klemmverbindung 50 festgelegt ist. Das Seil 47 umschlingt die Muffe 37a und läuft von dort zur Muffe 39a, wo es ebenfalls über eine Klemmverbindung 51 festgeklemmt ist.

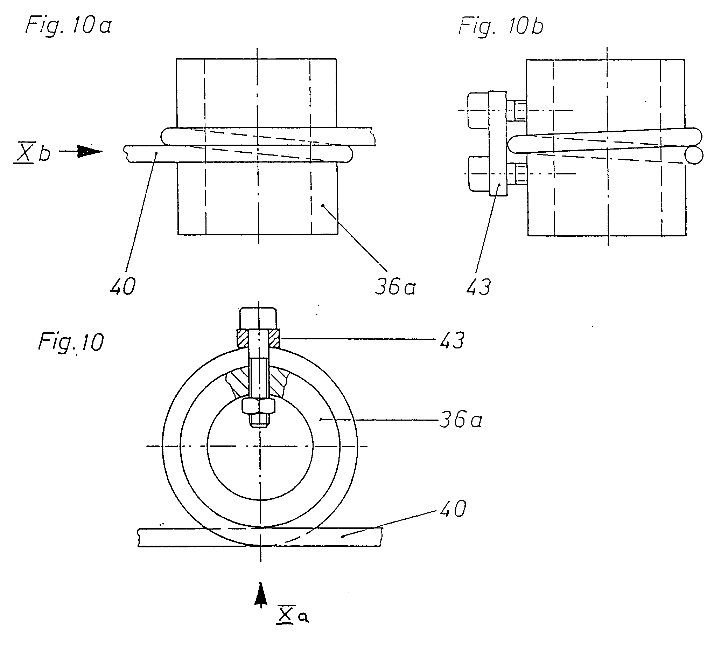

Die Führung des Seiles 47 im Bereich des Armes 33a geht aus den Figuren 8, 9 und 10 hervor.

Über das untere ständiger Spannung durch die Federn 44,48 stehende Seil 40 bzw. 47 wird vom Hebel 16 die Schwenkbewegung entsprechend den Pfeilen B an die anderen Hebel 33,33a,15 weitergegeben, so daß die Hebel 16,33,33a und 15 untereinander gekoppelt sind.

Während die zweiarmigen Hebel 15 und 16 an den Wellen 23 bzw. 23a gelagert sind, sind die weiteren Hebel 33,33a nicht an der Welle 23 bzw. 23a gelagert, sondern alleine durch das Seil 40,47 gehalten. Dabei ist bei den freischwebend angeordneten Hebeln 33 und 33a die Führung des Seiles 40 bzw. 47 gewählt, daß das gemäß Figur 8 von der linken Seite auf die Muffe 36a zulaufende Seil 40 von oben her einläuft, um die Muffe 36a herumläuft und unterhalb des einlaufenden Seilbereiches die Muffe 36a verläßt. Bei der anderen Muffe 37a erfolgt die Führung des Seiles 47 - von links kommend - zur Muffe 37a, umschlingt diese und läuft über dem einlaufenden Ende weiter zur Muffe 37 des anderen Hebels 33.

Bei dem Hebel 33 erfolgt die Führung der Seile 40 und 47 analag, d.h. das Seil 40 läuft analog wie beim Hebel 33a, von links kommend, von oben her auf die Muffe 36, umschlingt diese und läuft unterhalb aus. Bei der Muffe 37 des Hebels 33 läuft das Seil - von links kommend - von unten her ein und von oben her nach rechts weiter zur Feder 48.

Die Hebel 33 und 33a sind unter Zwischenlage je einer Stützfeder 55,55a an den unteren Querträgern 8,9 abgestützt und aufgrund der Führung mittels des Seiles wohl in der Höhe als auch in ihrer Seitenlage variabel, wodurch sie Unebenheiten des Bodens in einfacher und wirksamer Weise ausgleichen könne.

An jedem der zweiarmigen Hebel 15,16,33,33a ist am vorderen in Fahrtrichtung A voreilenden Ende, d.h. in der vorderen Reihe A1, je ein Paar von Werkzeugen 60,61, 62,63;62a,63a und 60a,61a befestigt. In der hinteren Reihe A2 sind die Werkzeuge 64,65 bzw. 66,67 sowie 66a,67a und 64a,65a befestigt.

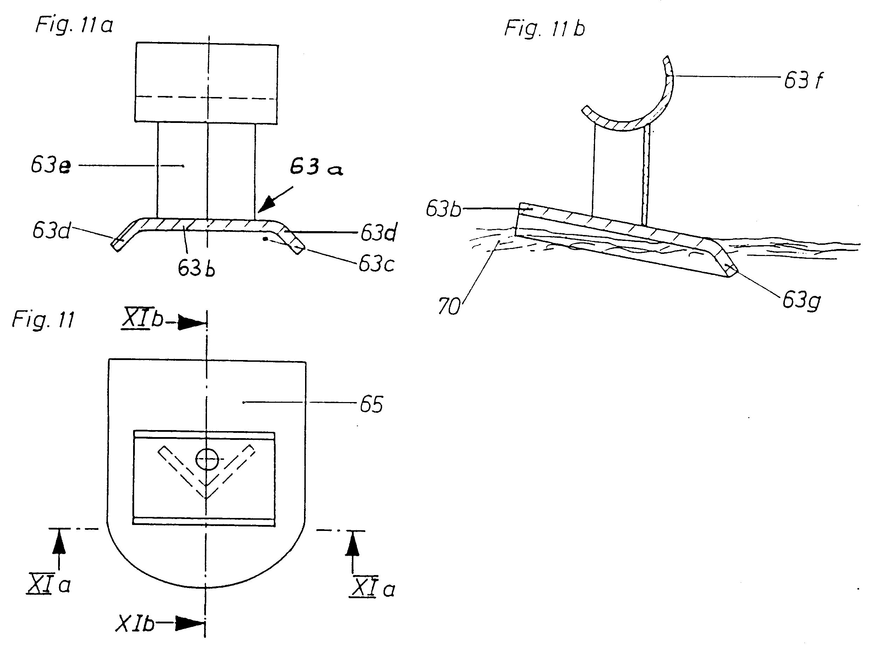

Jedes dieser schuhartigen Werkzeuge, von denen das in Figur 9 gezeigte Werkzeug 63a anhand der Figuren 11, 11a und 11b beschrieben ist, besitzt ein im wesentlichen plattenartiges Basisteil 63b, dessen vorderer Bereich 63g sowie dessen seitliche Bereiche 63d nach unten gebogen sind, so daß unterhalb der Basis 63b ein von den nach unten gebogenen Bereichen 63d und 63g begrenzter Hohlraum 63c gebildet ist. Die Rückseite des Basisteils 63b ist nicht nach unten gebogen, so daß der Hohlraum 63c hinten offen ist. Die Enden der nach unten gebogenen Bereiche 63d und 63g bilden auf den Boden gerichtete schneidenartige Konturen, die sowohl bei einer Bewegung des Fahrzeugs in Fahrtrichtung A, als auch bei der Durchführung der Schwenkbewegung B in den Boden eintauchen und den Unkrautbewuchs mittels der an drei Seiten umlaufenden Kanten aus dem Boden herauschaben und nach oben befördern.

Das plattenartige Basisteil 63b ist über einen Verbindungssteg 63e mit einer Halbschale 63f verbunden, über die die Werkzeuge 63 an den Stäben bzw. Querstreben 28,29,34,35;34a,35a,29a,28a befestigt sind.

Wie insbesondere aus Figur 11b hervorgeht, ist das plattenartige Basisteil 63b der Werkzeuge 63a leicht nach vorne und unten geneigt. Die Abschlußschicht (Deckschicht) der Bodenfläche 70 besteht gemäß Figur 11b aus einer Schicht von etwa 3 bis 5 cm Bergsand, Splitt oder dergleichen. Bei der Hin- und Herbewegung des Werkzeugs taucht zumindest der vordere nach unten gebogenen Bereich 63g des plattenartigen Basisteils 63b leicht in den Boden ein, und die Kanten schneiden bzw. schaben das im Boden sitzende Unkraut mitsamt den Wurzelballen heraus. Das Unkraut und die Wurzeln trocknen innerhalb kurzer Zeit aus und sind damit vernichtet. Gegebenenfalls kann das Unkraut noch entfernt, beispielsweise weggebürstet, zur Seite gebürstet, abgesaugt oder abgetragen werden, z.B. durch entsprechende, am Gerät vorgesehene Aggregate.

Die Bewegungsbahnen und die Anordnung zweier benachbarter Werkzeuge sind dabei so gewählt, daß die Bewegungsbahnen einander überdeckend sind.

Die Werkzeuge der vorderen Reihe A1 und der hinteren Reihe A2 sind derart angeordnet bzw. geführt, daß jeder Bodenbereich mehrfach überdeckt wird.

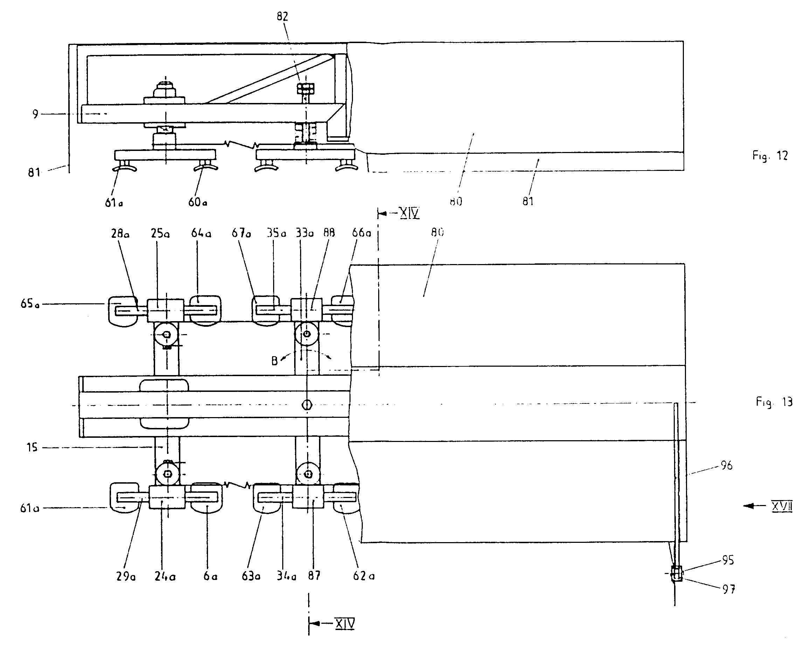

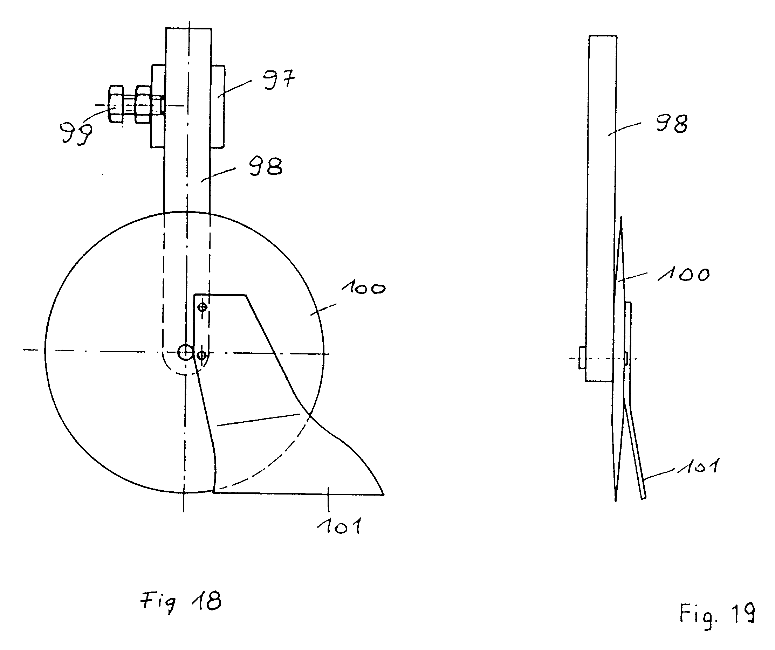

Die in Figur 1 und 2 gezeigten Hebel 33,33a können aber auch ähnlich wie die Arme 15,16 um Wellen 23a,23 gelagert sein, wie dies am Beispiel des Hebels 33a im folgenden anhand der Figuren 12 bis 19 erläutert ist.

Die Figuren 12 und 13 zeigen, ähnlich wie die Figuren 1 und 2, das Gerät 1 in Ansicht und Draufsicht, wobei jedoch das Gerät mittels einer etwa bis zur Hälfte gezeigten Abdeckhaube 80 abgedeckt ist. Im unteren Bereich der Haube 80 befinden sich umlaufende Gummi-leisten.

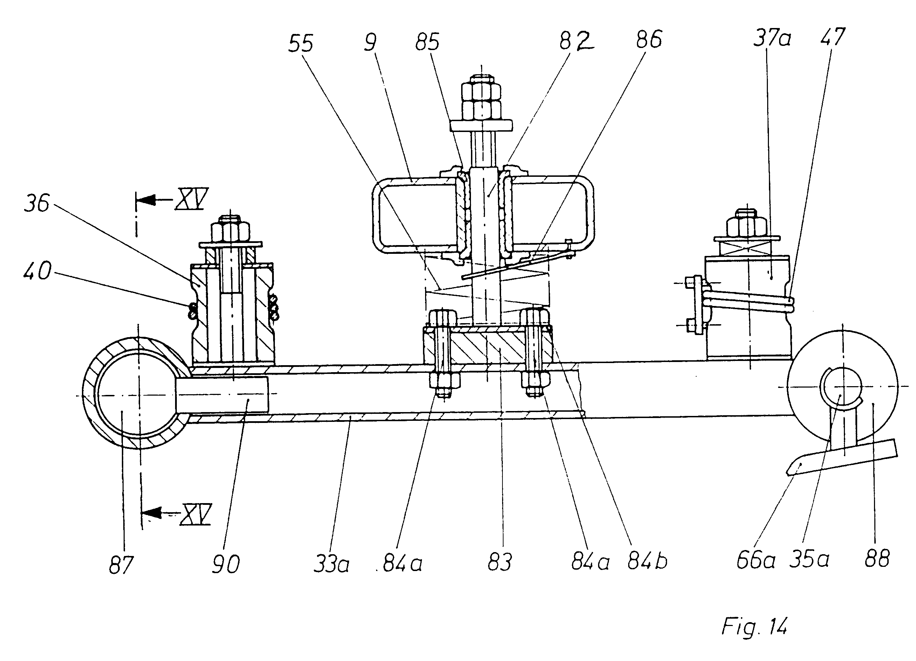

Figur 14 zeigt eine Ansicht des Gerätes 1 gemäß dem Schnitt XIV - XIV der Figur 13.

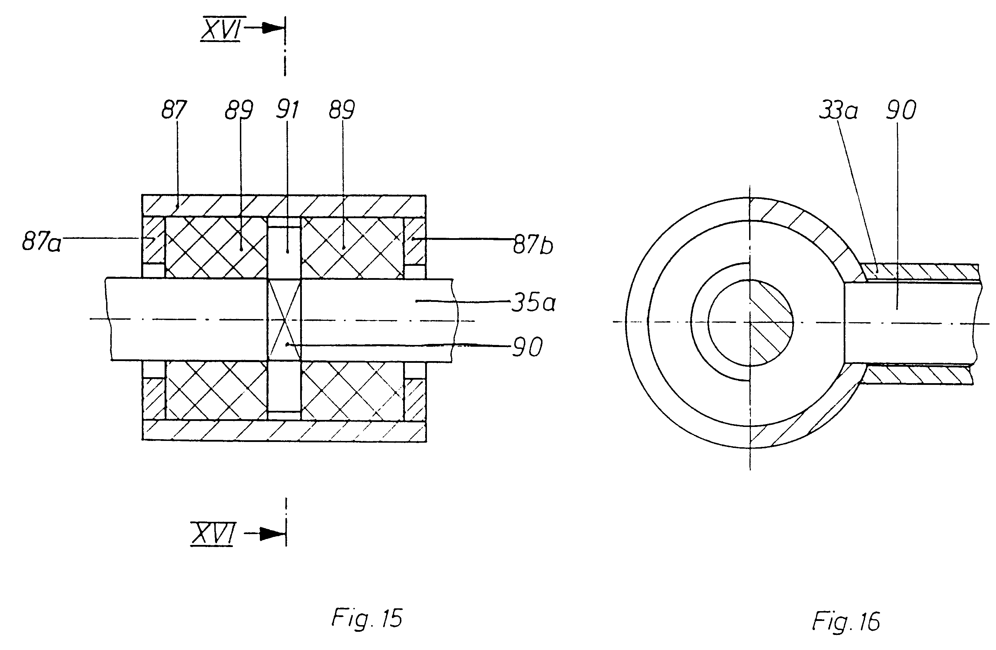

In Figur 13 ist der Hebel 15 mit den beiden Muffen 24a,25a und den Stäben 28a,29a - jedoch ohne die Quer-streben 31a,30a der Figur 1 - und mit den Werkzeugen 61a,60a sowie 65a und 64a erkennbar. Desgleichen ist der Hebel 33a mit den Streben 34a und 35a und den Werkzeugen 63a,62a sowie 67a,66a vorgesehen. Der Hebel 33a ist ebenso wie der nicht gezeigte Hebel 33 über eine Welle 82 im Querträger 9 drehbar bzw. schwenkbar gelagert und zusätzlich axial in der Höhe verlagerbar. Dies ist im Zusammenhang mit Figur 15, die einen Schnitt gemäß der Linie XV - XV der Figur 13 zeigt, näher erläutert. Der Hebel 33a ist unter Zwischenschaltung eines Gummi-Kissens 83 mit der Welle 82 verschraubt. Die Schrauben 84a haben hier sowohl ein gewisses Spiel in den Ausnehmungen des Hebels 33a als auch in den Durchgangsbohrungen einer mit der Welle 84 verbundenen Platte 84b. Die Welle 84 ist über Gleitlager 85, die sowohl eine dreh- bzw. schwenkbare Lagerung der Welle 84 als auch eine axiale Verlagerung derselben im Querträger 9 gewährleistet, gelagert. Zwischen dem Querträger 9 und dem Hebel 33a ist, wie in Figur 1, die Feder 55 vorgesehen. Zur Dämpfung von Axialschwingungen als auch von Drehschwingungen ist ein unter Spannung an der Welle 84 anliegendes Reib-Dämpfer-Element 86 vorgesehen.

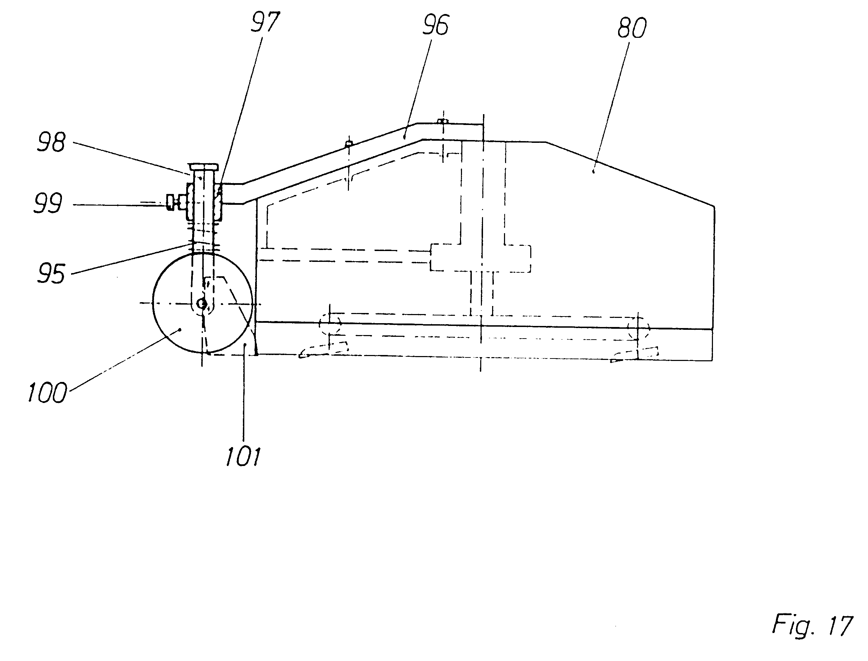

Ähnlich wie die Stäbe 28a,29a in den Muffen 25a,24a der Figuren 1,2 über eine Gummilagerung gehalten sind, sind auch in den Figuren 12, 13 und 15 die Streben 34a,35a auf dem Hebel 33a und dem nicht gezeigten Hebel 33 über Gummilagerungen befestigt, wie dies anhand der Figuren 16 und 17 näher erläutert ist. Hierfür besitzt der Hebel 33a eine vordere und eine hintere Muffe 87,88, in denen über die Gummilagerung 89 (von denen in Figur 16 die Muffe 87 im Schnitt gezeigt ist) die Querstreben 34a,35a pendelnd gehalten sind, soweit dies die Materialeigenschaften des verwendeten Gummi bzw. die Öffnungen in den Scheiben 87a,87b zulassen. Jede der Querstreben 34a,35a ragt mit einem Vierkantansatz 90, der an einer mit der Querstrebe 35a,34a verbundenen Scheibe 91 angeformt ist, in die Strebe 33a hinein. Der Ansatz 90 läßt eine Pendelbewegung der Streben 35a,34a zu, verhindert jedoch ein Kippen der Werkzeuge in einer Richtung um die Welle 34a. Die Ansätze 90 können aber auch elastisch gelagert sein, z.B. in Gummilagern, so daß die Wellen (34a in Figur 14) und damit die Werkzeuge (66a in Figur 14) eine gewisse Nachgiebigkeit bzw. Verschwenkmöglichkeit um die Wellen (34a in Figur 14) bzw. in oder entgegen der Bewegungsrichtung A besitzen.

In Figur 14 sind wiederum die Muffen 36a,37a erkennbar, um die die Seile 40 und 47 geschlungen sind.

Durch die schwenkbare bzw. drehbare Lagerung der Hebel 33a,33 in dem Querträger 9 ist eine exakte, schwingungsfreie Lagerung der Hebel gewährleistet. Durch die axial verlagerbare Halterung sowie die schwenkbare Halterung der Hebel 33a,33 gegenüber der Welle 84 und durch die schwenkbare Halterung der Wellen 34a,35a bzw. 35,34 ist eine optimale Anpassung der entsprechenden Arbeitselemente an Unebenheiten des Bodens gewährleistet.

Ebenso wie die Hebel 34a,35a können die Stäbe 28a,29a, 28,29 mit einem Ansatz 90 versehen sein, wie dies im Zusammenhang mit dem Stab 34a gezeigt ist. Der Ansatz 90 verhindert ein Kippen der entsprechenden Werkzeuge, so daß keine Querstreben 31a,30a,31,30 wie in Figur 1 notwendig sind.

Wie aus den Figuren 17, 18 und 19 ersichtlich ist, besitzt das Gerät 1 außerdem noch eine Kantenschneideinrichtung 95, die über einen Haltearm 96 am Gehäuse 80 befestigbar ist. Am Haltearm 96 ist eine, hier vierkantig ausgebildete Führungshülse 97 befestigt, in der ein Vierkantstab 98 gleitend geführt ist. Über eine Stellschraube 99 ist dieser Vierkantstab in einem festen Abstand zum Haltearm 96 fixierbar, so daß die Höhe des am unteren Ende des Vierkantstabes drehbar gelagerten Schneidrades oder Vorschälers 100 einstellbar ist. Auf dem Vierkantstab 98 ist weiterhin noch ein Abstreifblech oder eine Schar 101 befestigt, das bei einer Vorwärtsbewegung in Richtung des Pfeils A die vom Schneidrad 100 abgetrennten Rasenstücken zur Gerätmitte fördert. Diese Rasen- und Erdballen werden dann ebenfalls von den Werkzeugen "bearbeitet", wobei Gras und Wurzeln von der Erde weitgehend getrennt werden.

## Patentansprüche

1. Gerät zum Entfernen von Wildkrautbewuchs auf Wegen, Plätzen, Parks usw., die insbesondere eine Decke aus Kies, Sand, Schotter oder dergleichen aufweisen, mit einem Geräte- träger, der zumindest ein bewegbares Bauteil aufweist, an dem zumindest ein mit dem Boden in Kontakt zu bringendes Werkzeug gelagert ist, dadurch gekennzeichnet, daß das Werkzeug (60,60a, 61,61a,62,62a,63,63a,64,64a,65,65a,66,66a,67,67a) ein schuhartiges Basisteil (63b) aufweist, das an seiner in Fahrtrichtung (A) weisenden Vorderkante und seinen Seitenkanten Schneiden besitzt, mit denen es zumindest teilweise in den Boden eingetaucht, und daß das Werkzeug eine im wesentlichen quer zur Fahrtrichtung verlaufende Oszillationsbewegung ausführt.

2. Gerät nach Anspruch 1, dadurch gekennzeichnet, daß das Werkzeug in Fahrtrichtung nach unten geneigt ist.

3. Gerät nach Anspruch 1 oder 2, dadurch gekennzeichnet, daß das Basisteil (63b) im wesentlichen plattenförmig ausgebildet ist und die Schneiden von nach unten gebogenen Randbereichen (63d,63g) des Basisteils (63b) gebildet sind.

4. Gerät nach Anspruch 3, dadurch gekennzeichnet, daß unterhalb des plattenförmigen Basisteils (63b) ein von den nach unten gebogenen Randbereichen (63d, 63g) begrenzter Hohlraum (63c) gebildet ist.

5. Gerät nach einem der Ansprüche 1 bis 4, dadurch gekennzeichnet, daß die Seitenkanten im wesentlichen senkrecht zu der Vorderkante verlaufen.

6. Gerät nach einem der Ansprüche 1 bis 5, dadurch gekennzeichnet, daß mehrere Werkzeuge im wesentlichen quer zur Fahrtrichtung (A) in wenigstens einer Reihe (A1,A2) nebeneinander angeordnet sind.

7. Gerät nach einem der Ansprüche 1 bis 6, dadurch gekennzeichnet, daß zumindest einige der Werkzeuge quer zu ihrer Bewegungsrichtung pendelnd bzw. kippbar gelagert sind.

8. Gerät nach einem der Ansprüche 1 bis 7, dadurch gekennzeichnet, daß zumindest einige der Werkzeuge in Richtung senkrecht zum Erdboden verlagerbar sind.

9. Gerät nach einem der Ansprüche 1 bis 8, dadurch gekennzeichnet, daß das am Geräteträger gelagerte Bauteil im wesentlichen quer zur Fahrtrichtung hin- und herbewegbar ist.

10. Gerät nach einem der Ansprüche 1 bis 9, dadurch gekennzeichnet, daß die Werkzeuge gegenüber dem hin- und herbewegbaren Bauteil in ihrer Höhe verlagerbar gehalten sind.

11. Gerät nach einem der Ansprüche 1 bis 10, dadurch gekennzeichnet, daß das hin- und herbewegbare Bauteil in vertikaler Richtung verlagerbar geführt ist.

12. Gerät nach einem der Ansprüche 1 bis 11, dadurch gekennzeichnet, daß zumindest eines der Werkzeuge von einem Kraftspeicher in Richtung des Bodens beaufschlagt ist.

13. Gerät nach Anspruch 12, dadurch gekennzeichnet, daß der Kraftspeicher ein Gewicht oder eine Feder ist.

14. Gerät nach einem der Ansprüche 1 bis 13, dadurch gekennzeichnet, daß in Fahrtrichtung zwei Werkzeuge in einem Abstand hintereinander angeordnet sind.

15. Gerät nach Anspruch 14, dadurch gekennzeichnet, daß die beiden hintereinander angeordneten Werkzeuge gegenläufig arbeiten.

16. Gerät nach einem der Ansprüche 1 bis 15, dadurch gekennzeichnet, daß mehrere Werkzeuge in einer vorderen Reihe (A1) und einer hinteren Reihe (A2) nebeneinander angeordnet und daß die Werkzeuge jeder Reihe synchron angetrieben sind.

17. Gerät nach einem der Ansprüche 1 bis 16, dadurch gekennzeichnet, daß je zwei benachbarte Werkzeuge paarweise an einem Ende einen zweiarmigen Hebels angebracht sind, der um eine zumindest annähernd senkrecht zum bearbeitenden Boden verlaufende Achse schwenkbar ist.

18. Gerät nach Anspruch 17, dadurch gekennzeichnet, daß auf dem zweiarmigen Hebel sowohl ein Paar Werkzeuge der vorderen Reihe (A1) als auch ein Paar Werkzeuge der hinteren Reihe (A2) angeordnet sind.

19. Gerät nach Anspruch 17 oder 18, dadurch gekennzeichnet, daß der zweiarmige Hebel pendelnd gelagert ist.

20. Gerät nach einem der Ansprüche 1 bis 19, dadurch gekennzeichnet, daß zumindest einige der Werkzeuge derart geführt und/oder gelagert sind, daß die in Richtung der hin- und hergehenden Bewegung jeweils voreilende Schneide weiter in den Boden eindringt als die nacheilende Schneide.

21. Gerät nach einem der Ansprüche 1 bis 20, dadurch gekennzeichnet, daß das Gerät zwischen zwei äußeren zweiarmigen Hebeln, die jeweils ein Paar Werkzeuge der vorderen Reihe (A1) und ein Paar Werkzeuge der hinteren Reihe (A2) tragen, wenigstens einen zweiarmigen Hebel besitzen.

22. Gerät nach einem der Ansprüche 1 bis 21, dadurch gekennzeichnet, daß ein Paar benachbarter Werkzeuge der vorderen und/oder der hinteren Reihe auf einer gemeinsamen Querstrebe angeordnet sind, die zumindest annähernd quer zu der bei der hin- und hergehenden Bewegung durchfahrenden Ebene schwenkbar ist.

23. Gerät nach einem der Ansprüche 1 bis 22, dadurch gekennzeichnet, daß einer der zweiarmigen Hebel von einem oszillierenden Antrieb des Gerätes antreibbar ist.

24. Gerät nach Anspruch 23, dadurch gekennzeichnet, daß alle zweiarmigen Hebel miteinander antriebsmäßig gekoppelt sind.
